# EUROPÄISCHE PATENTANMELDUNG

(11) **EP 1 050 750 A2**
(43) Veröffentlichungstag der Anmeldung: **08.11.2000**
(21) Anmeldenummer: 00106307.2
(22) Anmeldetag: 23.03.2000
(51) Int. Cl.: G01J 5/60

(54) **Verfahren zur Erkennung von Farbmustern auf Oberflächen**

(30) Priorität: 04.05.1999 DE 19920364
(71) Anmelder: FRAUNHOFER-GESELLSCHAFT ZUR FÖRDERUNG DER ANGEWANDTEN FORSCHUNG E.V., 80636 München (DE)
(72) Erfinder: Plinke, Burkhard, 38102 Braunschweig (DE)
(74) Vertreter: Gerstein, Hans Joachim, Dipl.-Ing.

(57) **Zusammenfassung**

Ein Verfahren zur Erkennung von Farbmustern auf Oberflächen mit mindestens einem auf die Oberfläche gerichteten Farbsensor weist die Schritte auf von:
a) Bewegen der Oberfläche relativ zu dem Farbsensor;
b) kontinuierliches Messen und Aufzeichnen der Sensorsignale;
c) Ermitteln von Kenngrößen aus Zeitintervallen der Sensorsignale;
d) Vergleichen der Kenngrößen mit gespeicherten Größen für definierte Farbmuster und
e) Erkennen eines definierten Farbmusters , wenn die Kenngrößen ähnlich zu den gespeicherten Größen sind.

## Beschreibung

Die Erfindung betrifft ein Verfahren zur Erkennung von Farbmustern auf Oberflächen mit mindestens einem auf die Oberfläche gerichteten Farbsensor.

In Fertigungsanlagen wie z.B. in der Möbelindustrie werden mit verschiedenen Dekoren beschichtete plattenförmige Werkstoffe (z.B. Spanplatten, Faserplatten) zu Gebrauchs- oder Einrichtungsgegenständen weiterverarbeitet. In einer rechnergesteuerten Fertigungsanlage muß an bestimmten Stellen kontrolliert werden, ob das Werkstück tatsächlich mit dem vorgesehenen Dekor versehen ist oder fälschlicherweise ein optisch verschiedenes Dekor vorliegt, das aussortiert werden müßte. Diese Kontrolle kann automatisiert werden, wenn das farbliche Erscheinungsbild der zu unterscheidenden Dekore in geeigneter Weise charakterisiert wird. Handelt es sich um strukturierte Farbmuster, wie z.B. Holz- Marmorimitate oder ähnliches, so reicht es nicht aus, mit einem Farbsensor einen Meßwert aufzunehmen. Vielmehr müssen auch Informationen über die farbliche Struktur der Oberfläche berücksichtigt werden.

Zur Charakterisierung von Oberflächenfarben sind Sensoranordnungen bekannt, bei denen entweder genormte Verfahren der Farbmetrik, wie z.B. das CIELab-System, oder sensorspezifische Methoden verwendet werden. Prinzipiell gibt es dafür zur Zeit mehrere Möglichkeiten:
1. Spektrometer verwenden eine genormte Beleuchtung und Meßgeometrie. Sie erfassen das auf einer Oberfläche reflektierte Licht, spalten es mit Hilfe eines Prismas oder mit Gittern auf, gewichten rechnerisch das gesamte Farbspektrum und liefern drei Farbmeßwerte (L, a, b oder Differenzwerte zu einem Kalibriernormal), die auch mit denen anderer Meßgeräte vergleichbar sind. Spektrometer werden vor allem für Messungen im Labor eingesetzt, bei denen es auf Langzeitstabilität und Vergleichbarkeit ankommt. Sie liefern grundsätzlich nur eine Information über einen Punkt der Oberfläche bzw. über einen Meßfleck.
2. Es können Spektrometer verwendet werden, die als PC-Karte ausgeführt sind. Durch ein Lichtleiterkabel und gegebenenfalls eine Optik wird das Licht einer Lichtquelle auf die zu prüfende Oberfläche gestrahlt. Über parallele im Kabel geführte Faserbündel wird das reflektierte Licht zur PC-Karte geführt und dort wie in einem Spektrometer aufgespalten und ausgewertet.
3. Es können einfache, preisgünstige Farbsensoren verwendet werden, die ebenfalls mit einem Lichtleiterkabel arbeiten. Die Lichtleiterkabel spalten das vom Meßfleck empfangene Licht durch Farbfilter in mehrere Komponenten auf, die ebenfalls die Farbe charakterisieren. Die Meßergebnisse sind jedoch relativ und lassen nur Vergleiche mit Bezug auf den jeweiligen Sensor sowie die Beleuchtung und Meßgeometrie zu. Derartige Farbsensoren werden vor allem für industrielle Prüfaufgaben verwendet, wo eine schnelle Gut-Schlecht-Information gefordert ist.
4. Mit CCD-Flächen- oder Zeilenkameras kann ein rechteckiger Ausschnitt der Oberfläche aufgenommen werden, so daß eine Bildinformation üblicherweise in Form der drei Farbkanäle rot, grün, blau mit etwa 500.000 Bildpunkten gewonnen und in einen Speicher transferiert wird. Um die Farbinformationen auszuwerten, müssen Kameraeinstellung und Beleuchtung aufeinander abgestimmt sein und Mittelwerte über die gespeicherten Bildpunkte gebildet werden.

In Ch. Fausch, B. Senn "Genauer und schneller als das menschliche Auge" TR Transfer Nr. 51/52, 1993, Seiten 18 bis 20 ist eine automatische Farberkennung im On-Line-Betrieb unter Industriebedingungen beschrieben, bei der Farben an Messpunkten mit einem Farbsensor aufgenommen, in die Farbkomponenten Rot, Blau und Grün zerlegt und mit Referenzfarben verglichen werden. Die Farbmessungen werden zyklisch in bestimmten Abständen durchgeführt, wobei die Auswertung der Messsignale unabhängig voneinander erfolgt. Es werden somit nur Farben an bestimmten Messpunkten bestimmt und keine Farbmuster erkannt.

In P. Haas "Der kleine Unterschied" mpa 3-98, Seiten 32/33 ist ein Farbsensor zur Messung von Farben an Messpunkten beschrieben, wie ja z. B. in dem oben erwähnten automatischen Farberkennungsverfahren eingesetzt werden kann. Eine Messung von Farbmustern erfolgt nicht.

In R. Attias, F. Colla, R. Poluzzi "Color Classification And Image Enhancement Using Fuzzy Logic" Proc. of the WILF 95 - Italian workshop of Fuzzy Logic 1995, 21. - 22.09.1995, World Scientific, Seiten 135 bis 142 ist ein Segmentierungsverfahren für Farbbilder mit Hilfe einer Fuzzy Logic beschrieben. Mit dem Verfahren können einzelne Bildpunkte, die z. B. mit einem Farbsensor bzw. einer Kamera aufgenommen wurden, klassifiziert und einem Farbton zugeordnet werden. Eine Unterscheidung von Farbmustern ist hingegen nicht möglich.

Die vorgenannten Prinzipien sind nur bedingt dazu geeignet, verschiedene Arten von Farbmustern an bewegten Platten voneinander zu unterscheiden. Vor allem besteht das Problem der Erkennung von Mustern, die ausgedehnter als ein Meßfleck bzw. das Bildfeld des Sensors sind.

Aufgabe der Erfindung war es daher, ein Verfahren zur Erkennung von Farbmustern auf Oberflächen zu schaffen, bei dem großflächige Muster mit einfachen Mitteln zuverlässig erkannt werden können.

Die Aufgabe wird durch das Verfahren nach Anspruch 1 mit den Schritten gelöst:
a) Bewegen der Oberfläche relativ zu dem Farbsensor;
b) kontinuierliches Messen und Aufzeichnen der Sensorsignale;
c) Ermitteln von Kenngrößen aus dem zeitlichen Verlauf der Sensorsignale in Zeitintervallen;
d) Vergleichen der Kenngrößen mit gespeicherten Größen für definierte Farbmuster und
e) Erkennen eines definierten Farbmusters, wenn die Kenngrößen ähnlich zu den gespeicherten Größen sind.

Durch relatives Bewegen der Oberflächen in Bezug auf den Farbsensor und Auswerten des zeitlichen Signalverlaufes können Farbmuster erkannt werden, obwohl der Farbsensor nur ein eingeschränktes Bildfeld aufweist. Auf einfache Weise werden Kenngrößen aus den Signalverläufen ermittelt und mit gespeicherten Kenngrößen verglichen. Hierdurch entfällt die Notwendigkeit einer aufwendigen Optik oder Bilddatenverarbeitung.

Damit das System die Muster erkennen kann, muß es entsprechend trainiert werden. Hierzu werden die Kenngrößen einer Anzahl von Probemustern (Lernstichprobe) ermittelt und abgespeichert.

Die Sensorsignalverläufe sollten bezogen auf die Vorschubgeschwindigkeit aufgezeichnet werden. Hierzu ist es vorteilhaft, wenn die Oberfläche mit konstanter Vorschubgeschwindigkeit gleichförmig bewegt wird. Es ist aber auch denkbar, daß die Sensorsignale zeitlich in Abhängigkeit von der Vorschubgeschwindigkeit aufgezeichnet werden, so daß einem Punkt auf der Signalkurve ein definierter Meßpunkt auf der Oberfläche zugeordnet werden kann. Hierzu kann z.B. die Abtastung der Meßsignale in Abhängigkeit von der Vorschubgeschwindigkeit variiert werden.

Es ist weiterhin vorteilhaft, wenn das Vergleichen der Kenngrößen und das Erkennen eines definierten Farbmusters mit einer unscharfen Logik, d.h. einer Fuzzy-Logik erfolgt. Hierbei werden Zugehörigkeitsfunktionen ausgewertet, so daß Schwankungen der Meßwerte ausgeglichen werden können. Es ist damit möglich, preisgünstige Farbsensoren zu verwenden.

Als Kenngrößen dienen vorteilhafterweise die Mittelwerte, Maximalwerte, Minimalwerte, das Frequenzspektrum und/oder Variationskoeffizienten von Zeitintervallen des Sensorsignals. Diese Kenngrößen werden vorteilhafterweise in Zeitintervallen bestimmt, bei denen die Vorschubgeschwindigkeit konstant ist.

Weiterhin ist es vorteilhaft, diese Kenngrößen für jeweils verschiedene Kanäle der Farbsensoren zu bestimmen. Jeder Kanal eines Farbsensors liefert jeweils ein bestimmtes Farbcharakteristikum. So können z.B. Kanäle für den Grauwert, den Rot/Grünanteil oder den Blau/Gelbanteil vorhanden sein. Es können auch Kanäle für die Luminanz und die Chrominanzen für die Farben rot und blau oder die Farbanteile der Farben rot, grün und blau (RGB) vorgesehen sein.

Weiterhin ist es denkbar, lediglich Helligkeitsinformationen als Grau-Werte auszuwerten. Dann können statt Farbsensoren preisgünstige einkanalige Sensoren verwendet werden.

Die Sensorsignale und/oder Kenngrößen werden vorteilhafterweise auf ein Kalibriernormal normiert. Hierzu können z.B. die Kenngrößen für eine weiße Oberfläche bestimmt werden.

Die Erfindung wird nachfolgend anhand der beigefügten Zeichnungen näher erläutert. Es zeigen:
- Figur 1 -: Schematische Darstellung einer Meßanordnung für das Verfahren zur Farbmustererkennung;
- Figur 2 -: Signalverlauf und Kenngrößen für ein Holzdekor "Buche";
- Figur 3 -: Signalverlauf und Kenngrößen für ein Holzdekor "Eiche"

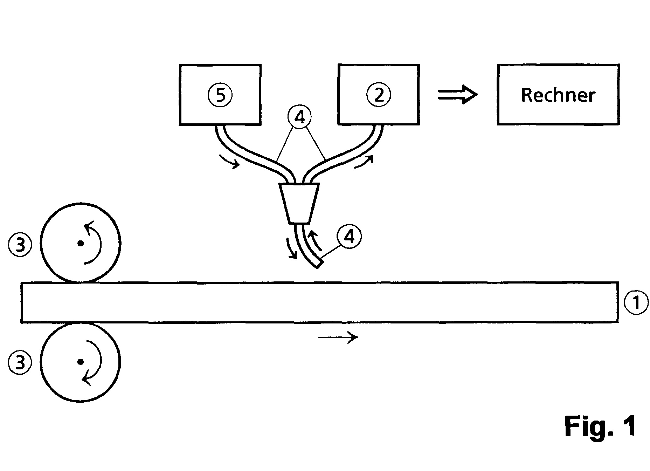

Die Figur 1 läßt einen Meßaufbau zur Durchführung des Verfahrens zur Farbmustererkennung erkennen, bei dem ein Werkstück 1 horizontal unter einem Farbsensor 2 bewegt wird. Der Farbsensor 2 wird über dem Werkstück 1 angebracht und die Werkstücke 1 werden auf einer Transportvorrichtung 3, z.B. einem Fließband bzw. Werkstückträger, mit gleichförmiger Geschwindigkeit und weitgehend ohne Bewegung senkrecht zur Werkstückebene geführt. Das Werkstück 1 ist eine ebene Platte.

Der Farbsensor 2 hat einen Lichtleiter 4, dessen Ende an einem festen Punkt über dem Werkstück 1 angebracht ist und unter einem Winkel von etwa 45° bei einem Abstand von bis zu etwa 5 cm auf die Oberfläche des Werkstücks 1 gerichtet ist. Das Licht einer Lichtquelle 5 wird durch einen Teil der Fasern des Lichtleiters 4 auf die Oberfläche des Werkstücks 1 gestrahlt. Durch die übrigen Fasern des Lichtleiters 4 wird das reflektierte Licht zum Farbsensor 2 geführt. Als Farbsensor 2 kann ein preisgünstiger Sensor mit mehreren analogen Signalausgängen verwendet werden, die den Farbeindruck beispielsweise als "Grauwert", "rot/grün" und "blau/gelb" charakterisieren.

Die analogen Ausgabekanäle des Farbsensors 2 werden mit möglichst hoher Abtastrate mit einem rechnergestützten Analog-Digital-Wandler digitalisiert und abgespeichert. Aus den Signalverläufen wird jeweils ein Zeitintervall ausgewertet, in dem keine transportbedingten Meßwertschwankungen auftreten und die Fördergeschwindigkeit konstant ist. Aus den gespeicherten Signalverläufen aller Kanäle des Farbsensors werden jeweils Kenngrößen der beschreibenden Statistik, wie z.B. Mittelwert, Maximalwert, Minimalwert, Variationskoeffizient etc., oder des Frequenzspektrums errechnet. Diese Merkmale dienen zur Charakterisierung der Farbstruktur der Oberflächen.

Zur Unterscheidung der verschiedenen Dekore der Werkstoffoberflächen wird ein parametrierbares Rechenverfahren eingesetzt, das mögliche Schwankungen in der Verteilung der Meßwerte berücksichtigt und es ermöglicht, ohne großen Aufwand neue Dekore zur Datenbasis hinzu- bzw. herauszunehmen. Hierzu eignen sich Objektklassifikationsverfahren, die nach dem Prinzip der unscharfen Mengen arbeiten. Derartige Auswerteverfahren sind z.B. als Fuzzy-Logik bekannt. Die unscharfen Mengen werden Fuzzy-Sets genannt. Jede statistische Kenngröße eines jeden Kanals stellt einen Klassifikator dar.

Zur Dekorerkennung müssen zunächst in einer Lernphase für jedes Dekor sogenannte Fuzzy-Sets bestimmt und abgespeichert werden. Hierzu müssen für jedes Dekor die Meßwerte einer ausreichend großen Mustersammlung (Kernstichprobe) ermittelt und ausgewertet werden und die Meßwertverteilung für jeden Klassifikator und jedes Dekor bestimmt werden. Die für jedes Dekor ermittelten Fuzzy-Sets werden im Rechner abgespeichert.

Zur Erkennung eines Farbmusters auf einer Oberfläche werden pro Kanal des Farbsensors 2 jeweils die statistischen Kenngrößen aus den Signalverläufen, d.h. den Meßwerten, ermittelt. Die statistischen Kenngrößen aller Klassifikatoren werden mit den gespeicherten Fuzzy-Sets aller in Frage kommenden Farbmuster bzw. Dekore verglichen und es wird dasjenige Farbmuster ausgewählt, das eine möglichst große Übereinstimmung mit den gemessenen Kenngrößen zeigt. Zusätzlich kann überprüft werden, ob die Übereinstimmung eindeutig war oder ob nahezu gleichwertige Übereinstimmungen mit anderen gespeicherten Farbmustern bestehen.

In der Lernphase müssen einmalig ausreichend viele Meßwerte eines jeden Farbmusters unter Produktionsbedingungen aufgenommen werden. Hierzu dürfen die Meßwerte keine Drift aufweisen oder müssen auf ein Kalibriernormal, z.B. auf eine weißbeschichtete Platte, bezogen werden.

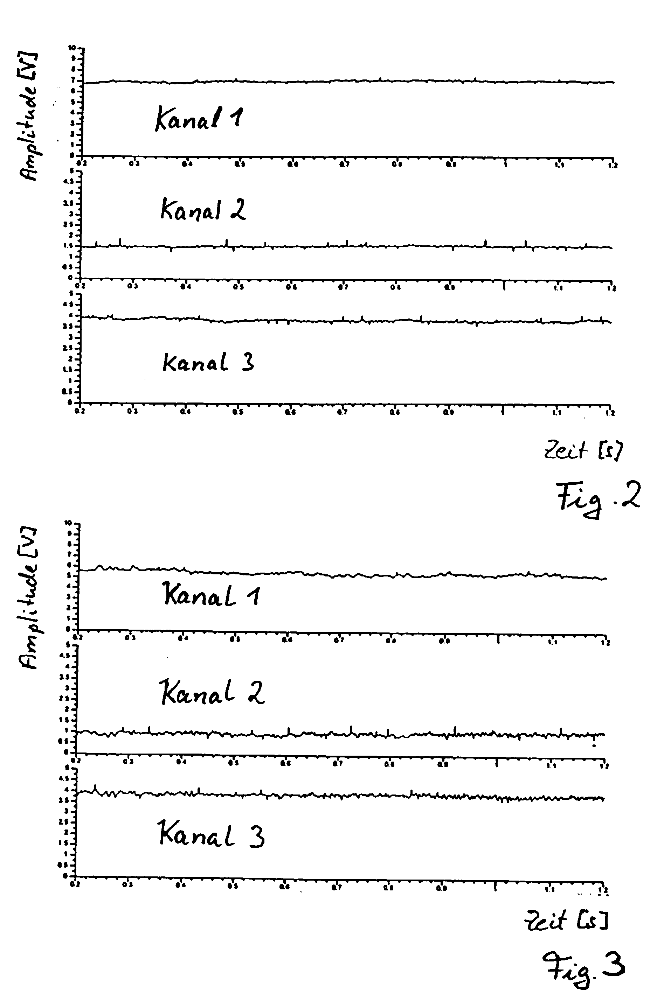

Die Figuren 2 und 3 zeigen beispielhafte Signalverläufe und Kenngrößen für verschiedene Holzdekore "Buche" oder "Eiche". Hierbei sind die Signalverläufe an drei Kanälen eines Farbsensors als Ausgangsspannung über die Zeit aufgetragen. Bei dieser Variante der Aufzeichnung und Auswertung ist es erforderlich, daß die Oberfläche in den jeweils auszuwertenden Zeitintervallen mit einer konstanten Geschwindigkeit bewegt wird. Anderenfalls würde eine Signalverzerrung im Vergleich zu dem in der Lernphase aufgezeichneten Signalverlauf auftreten.

Die drei Kanäle liefern analoge Ausgangssignale, wobei der Kanal 1 die Helligkeit charakterisiert, der Kanal 2 eine Rot/Grün-Unterscheidung und der Kanal 3 eine Blau/Gelb-Unterscheidung trifft. Die in den Figuren 2 und 3 dargestellten Meßreihen wurden an einem Versuchsaufbau aufgenommen, bei dem das Ende eines mit dem Farbsensor 2 und einer Lichtquelle Y-förmig verbundenen Lichtleiterkabeis etwa 5 mm über der zu erkennenden Oberfläche in einem Winkel von etwa 45° montiert ist. Die Proben wurden mit einer Geschwindigkeit von etwa 0,8 m/s unter dem Farbsensor entlang geführt. Die Ausgangssignale des Farbsensors wurde mit einer Abtastrate von 1 Khz digitalisiert und es wurden aus einem eine Sekunde langen Intervall der arithmetische Mittelwert und der Variationskoeffizent eines jeden Kanals ausgewertet. Für die beiden verschiedenen Holzdekore ergaben sich beispielsweise die im folgenden tabellierten statistischen Kenngrößen:

| Kanal | Mittelwert | Variationskoeffizient * 100 |
|---|---|---|
| 1 | 7,023 | 1,191 |
| 2 | 1,535 | 3,386 |
| 3 | 3,835 | 1,588 |
| Kenngrößen für Holzdekor "Buche" | | |

| Kanal | Mittelwert | Variationskoeffizient * 100 |
|---|---|---|
| 1 | 5,501 | 3,135 |
| 2 | 0,999 | 8,702 |
| 3 | 3,900 | 1,843 |
| Kenngrößen für Holzdekor "Eiche" | | |

Zur Erkennung von Farbmustern im Betrieb werden den Figuren 2 und 3 entsprechende Signalverläufe aufgenommen und die entsprechenden statistischen Kenngrößen ermittelt. Dasjenige Dekor wird erkannt, dessen Mittelwert und Variationskoeffizient am besten mit dem entsprechenden Dekor aus der Lernstichprobe übereinstimmt.

## Patentansprüche

1. Verfahren zur Erkennung von Farbmustern auf Oberflächen mit mindestens einem auf die Oberfläche gerichteten Farbsensor mit den Schritten:
a) Bewegen der Oberfläche relativ zu dem Farbsensor;
b) kontinuierliches Messen und Aufzeichnen der Sensorsignale;
c) Ermitteln von Kenngrößen aus dem zeitlichen Verlauf der Sensorsignale in Zeitintervallen;
d) Vergleichen der Kenngrößen mit gespeicherten Größen für definierte Farbmuster und
e) Erkennen eines definierten Farbmusters, wenn die Kenngrößen ähnlich zu den gespeicherten Größen sind.

2. Verfahren nach Anspruch 1, **dadurch gekennzeichnet, daß** die Oberfläche gleichförmig mit konstanter Vorschubgeschwindigkeit bewegt wird.

3. Verfahren nach Anspruch 1 oder 2, **dadurch gekennzeichnet**, **daß** die Sensorsignale zeitlich in Abhängigkeit von der Vorschubgeschwindigkeit aufgezeichnet werden.

4. Verfahren nach einem der vorhergehenden Ansprüche, **gekennzeichnet durch** Vergleichen der ermittelten Kenngrößen mit allen gespeicherten Größen und Erkennen eines definierten Farbmusters, wenn die ermittelten Kenngrößen die größte Übereinstimmung mit den gespeicherten Größen des Farbmusters im Vergleich zu den Größen der anderen Farbmuster aufweist.

5. Verfahren nach einem der vorhergehenden Ansprüche, **dadurch gekennzeichnet, daß** in den Zeitintervallen die Bewegungsgeschwindigkeit der Oberfläche in Bezug auf den Sensor jeweils konstant ist.

6. Verfahren nach einem der vorhergehenden Ansprüche, **dadurch gekennzeichnet, daß** pro Sensorsignal als Kenngröße jeweils der Mittelwert des Sensorsignals in einem Zeitintervall berechnet wird.

7. Verfahren nach einem der vorhergehenden Ansprüche, **dadurch gekennzeichnet, daß** pro Sensorsignal als Kenngröße jeweils das Maximum des Sensorsignals in einem Zeitintervall bestimmt wird.

8. Verfahren nach einem der vorhergehenden Ansprüche, **dadurch gekennzeichnet, daß** pro Sensorsignal als Kenngröße jeweils das Minimum des Sensorsignals in einem Zeitintervall bestimmt wird.

9. Verfahren nach einem der vorhergehenden Ansprüche, **dadurch gekennzeichnet, daß** pro Sensorsignal als Kenngröße jeweils der Variationskoeffizient des Sensorsignals in einem Zeitintervall berechnet wird.

10. Verfahren nach einem der vorhergehenden Ansprüche, **dadurch gekennzeichnet, daß** pro Sensorsignal als Kenngröße das Frequenzspektrum des Sensorsignals in einem Zeitintervall berechnet wird.

11. Verfahren nach einem der vorhergehenden Ansprüche, **dadurch gekennzeichnet, daß** pro Sensor mehrere Kanäle für jeweils verschiedene Farbcharakteristika vorgesehen sind und jeweils pro Kanal Kenngrößen der Sensorsignale des Kanals ermittelt und ausgewertet werden.

12. Verfahren nach Anspruch 11, **dadurch gekennzeichnet, daß** als Farbcharakteristika der Grauwert, der Rot/Grün- und der Blau/Gelb- Anteil dienen.

13. Verfahren nach Anspruch 11, **dadurch gekennzeichnet, daß** als Farbcharakteristika die Luminanz und die Chrominanzen für rot und blau dienen.

14. Verfahren nach Anspruch 11, **dadurch gekennzeichnet, daß** als Farbcharakteristika die Farbanteile der Farben rot, grün und blau ausgewertet werden.

15. Verfahren nach einem der vorhergehenden Ansprüche mit analogen Sensorsignalen, **gekennzeichnet durch** Abtasten und Analog-/Digital-Wandeln der Sensorsignale.

16. Verfahren nach einem der vorhergehenden Ansprüche, **gekennzeichnet durch** Ermitteln eines Kalibriernormals für die Sensorsignale und/oder Kenngrößen und Normieren der Sensorsignale auf das Kalibriernormal.

17. Verfahren nach Anspruch 16, **dadurch gekennzeichnet, daß** zum Ermitteln eines Kalibriernormals eine einfarbige Oberfläche relativ zum Farbsensor bewegt wird.
